# EUROPÄISCHE PATENTSCHRIFT

(11) **EP 3 787 158 B1**
(45) Veröffentlichungstag und Bekanntmachung des Hinweises auf die Patenterteilung: **19.06.2024**
(21) Anmeldenummer: 20191785.3
(22) Anmeldetag: 19.08.2020
(51) Int. Cl.: H02K 5/173, H02K 49/10, H02K 9/00, G01N 33/00, B01L 1/00

(54) **VENTILATORDURCHFÜHRUNG FÜR EINE EMISSIONSPRÜFKAMMER UND EMISSIONSPRÜFKAMMER**
EMISSION TESTING CHAMBER AND VENTILATOR FEEDTHROUGH FOR AN EMISSION TESTING CHAMBER
CONDUITE DE VENTILATEUR POUR UNE CHAMBRE D'ESSAI D'ÉMISSIONS ET CHAMBRE D'ESSAI D'ÉMISSIONS

(30) Priorität: 28.08.2019 DE 102019123103
(43) Veröffentlichungstag der Anmeldung: 03.03.2021
(73) Patentinhaber: Olfasense GmbH, 24118 Kiel (DE)
(72) Erfinder: MANNEBECK, Dietmar, 24211 Honigsee (DE); FERNBERG, Meik, 24113 Molfsee (DE)
(74) Vertreter: Seemann & Partner Patentanwälte mbB

(56) Entgegenhaltungen:
- DE-A1-102007 019 817
- DE-A1-102015 217 244
- KR-A- 20160 116 529
- US-A1- 2001 017 249
- US-A1- 2002 046 915
- US-A1- 2005 206 260

## Beschreibung

Die Erfindung betrifft eine Ventilatordurchführung für eine Emissionsprüfkammer zur Übertragung einer Drehbewegung einer Antriebswelle von außerhalb einer Innenkammer der Emissionsprüfkammer auf einen Ventilator innerhalb der Innenkammer, sowie eine entsprechende Emissionsprüfkammer.

Die Erfindung betrifft allgemein das Gebiet der Gasanalyse, und zwar der Analyse von Emissionen von verschiedenen Materialien, die die Raumluft bereits in geringen Konzentrationen beeinträchtigen können. Beispiele von ausdünstenden Materialien sind beispielsweise Farben, Lacke, Beschichtungen, Möbel, Bodenbeläge und Wandbeläge, welche in Räumen noch nach ihrem Einbau als Lösemittel eingesetzte flüchtige organische Verbindungen (VOC) oder andere leicht flüchtige Stoffe ausgasen können. Da einige der genannten Materialien in Innenräumen große Flächenanteile haben können, kann die verstärkte Emission dieser Stoffe aus diesen Materialien zusammen mit einer unzureichenden Frischluftzufuhr zu Unwohlsein und auch zu Gesundheitsschäden der Bewohner führen.

Die analytische Erfassung der Substanzen ist wegen der geringen Konzentrationen in der Innenluft schwierig. Einige Stoffe neigen wegen ihrer hohen Polarität dazu, an Oberflächen und Geweben adsorbiert zu werden, so dass die Messergebnisse nicht notwendigerweise eine genaue Messung der tatsächlich ausgedünsteten Mengen dieser Stoffe darstellen. Da die Konzentrationen von organischen Verunreinigungen in der Innenluft normalerweise klein sind (Mikrogramm pro Kubikmeter Luft), sind direktanzeigende Messgeräte für die meisten Anwendungen zu unempfindlich.

Da geringe Abgaben flüchtiger Stoffe ein Qualitätskriterium von Produkten sind, werden die Emissionen der Produkte in Emissionsprüfkammern gemessen, in denen unter kontrollierbaren Bedingungen eine Innenraumsituation mit dem jeweiligen Prüfkörper simuliert werden kann.

Ein Vergleich von Emissionsprüfkammern wird in der Dissertation "Vergleich von Emissionsprüfkammern: Untersuchungen unter dynamischen Bedingungen", Erik Uhde, TU Braunschweig, 1998, angestellt.

Ein Typus von Emissionsprüfkammern sind durchmischte Kammern. Diese Kammern arbeiten nach dem Prinzip des Rührkesselreaktors. Es gibt einen Einlass, durch den die Kammer, in der sich das Prüfobjekt befindet, mit gereinigter Frischluft versorgt wird, einen Auslass, durch den die Kammerluft den Prüfraum verlässt und einen Rührer oder Lüfter im Prüfraum, der im günstigsten Falle für eine vollständige Durchmischung der Kammerluft sorgt. Die Probenahme erfolgt entweder am Kammerausgang oder direkt aus dem Prüfraum. Die Volumina ideal durchmischter Emissionsprüfkammern variieren von wenigen Litern bis zu einigen Kubikmetern. Die verwendeten Konstruktionsmaterialien sind abhängig vom Einsatzzweck; während für Formaldehyd und andere Gase, die geringe Wechselwirkungen mit Oberflächen zeigen, verschiedene Materialien mit ausreichender Gasdichtigkeit eingesetzt werden können, sind bei der VOC-Analytik Glas und Edelstahl die bevorzugten Kammermaterialien. Kunststoffe scheiden hierfür wegen der Eigenemission von flüchtigen Verbindungen (Blindwerte) aus.

Die Temperatur in der Prüfkammer wird auf etwa ±1 °C kontrolliert und kann im Laufe der Emissionsprüfung kontrolliert erhöht werden, um in den Siedebereich verschiedener flüchtiger Verbindungen zu gelangen, beispielsweise zwischen Raumtemperatur und ca. 300 °C.

In einer Weiterbildung weist die Emissionsprüfkammer zwei ineinander geschachtelte Kammern auf, von denen die innere Kammer die eigentliche Prüfkammer darstellt, in der der jeweilige Prüfkörper aufgenommen wird, während die äußere Kammer als sogenannte Wärmekammer die innere Kammer thermisch ummantelt und zur Temperierung und zur Abschirmung der Innenkammer vor äußeren Einflüssen dient. Die Emissionsprüfung wird bei erhöhten Temperaturen durchgeführt. Dafür wird die äußere Kammer der Emissionsprüfkammer bereits auf eine erhöhte Temperatur, beispielsweise zwischen 60 °C und 100 °C aufgeheizt und die innere Kammer noch weiter. Zur Vorwärmung der Prüfluft kann ein Wärmetauscher im Innenraum der äußeren Kammer in der Prüfluftzufuhrleitung vorhanden sein. Die Prüfluft hat keinen direkten Kontakt mit der Luft in der äußeren Kammer.

Aus KR 10-2016-0116529 A ist eine Struktur zur Installation eines Ventilators bekannt, die die Zuverlässigkeit von Testresultaten erhöht, indem eine genaue Messung der Menge von volatilen organischen Verbindungen aus einer Probe innerhalb einer Messkammer ermöglicht wird. Die Struktur umfasst eine interne Stützeinheit, ein die Innenwand durchdringendes Rohr, eine externe Stützeinheit, einen Ventilatorschaft, eine vorderseitige Magnetinstallationsplatte, einen Antriebsmotor, eine Motorklammer, eine rückseitige Magnetinstallationsplatte, einen rückseitigen Magneten und eine Abdichtungsplatte. Bei dieser Konstruktion wird der sterile Innenraum der Kammer in das Rohr ausgeweitet.

US 2002/0046915 A1 offenbart eine magnetische Ventilatorkupplungseinrichtung, in der eine elektromagnetische und eine magnetische Kupplung miteinander wirkverbunden verkoppelt sind. Sie umfasst einen rotatorischen Permanentmagneten, an dem der Ventilator befestigt ist, sowie eine Scheibe, die einen Leiter oder ein Hysterese-Element gegenüberliegend zum rotationssymmetrischen Permanentmagneten aufweist. Zwischen dem Permanentmagneten und der Scheibe besteht ein schmaler Spalt. Die magnetische Kupplung kann an- und ausgeschaltet werden durch die elektromagnetische Kupplung. Außerdem ist eine Abdichtungsstruktur zwischen der Scheibe und dem rotationssymmetrischen Permanentmagneten vorhanden.

Ferner ist aus DE 10 2015 217 244 A1 eine Vorrichtung zur Kühlung eines hermetisch geschlossenen Raums bekannt, die einen Motor außerhalb des geschlossenen Raums, eine auf Lagern innendrehende Welle, eine Magnetkupplung zur Kraftübertragung vom Motor zur Welle und ein auf der Welle angebrachtes Lüfterrad aufweist.

Es ist die Aufgabe der vorliegenden Erfindung, die Emissionsprüfung mit entsprechenden Emissionsprüfkammern weiter zu verbessern.

Diese Aufgabe wird durch eine Ventilatordurchführung für eine Emissionsprüfkammer mit einem äußeren Kammergehäuse und einer im Inneren des äußeren Kammergehäuses angeordneten Innenkammer zur Übertragung einer Drehbewegung einer Antriebswelle von außerhalb der Innenkammer auf einen Ventilator innerhalb der Innenkammer gelöst, wobei die Ventilatordurchführung ein erstes Durchführungsteil und ein mit dem ersten Durchführungsteil konzentrisch angeordnetes zweites Durchführungsteil aufweist, wobei das erste Durchführungsteil innerhalb der Innenkammer und das zweite Durchführungsteil außerhalb der Innenkammer angeordnet ist, wobei das erste Durchführungsteil ein in Bezug auf eine Wandung der Innenkammer fixierbares erstes inneres Lagerteil, ein erstes Rotationslager und ein erstes äußeres Lagerteil aufweist, welches über das erste Rotationslager drehbar auf dem ersten inneren Lagerteil gelagert ist, wobei das zweite Durchführungsteil ein in Bezug auf die Wandung der Innenkammer fixierbares zweites inneres Lagerteil, ein zweites Rotationslager, und ein zweites äußeres Lagerteil aufweist, welches über das zweite Rotationslager drehbar auf dem zweiten inneren Lagerteil gelagert ist, wobei das erste äußere Lagerteil einen mitdrehenden ersten Magnethalter und das zweite äußere Lagerteil einen mitdrehenden zweiten Magnethalter aufweist, wobei der erste Magnethalter und der zweite Magnethalter jeweils einen oder mehrere in Umfangsrichtung diskrete Magnetsitze in einander entsprechender räumlicher Anordnung aufweisen, in den oder die jeweils ein Magnet einsetzbar oder eingesetzt ist.

Die Erfindung beruht auf dem Grundgedanken, dass der Antrieb des Ventilators als Rührelement in der Innenkammer eine Schwachstelle ist, welche zu einer Senke oder Quelle für Störgase werden kann.

Es ist unerwünscht, den Antrieb des Ventilators direkt in der Innenkammer anzuordnen, weil dieser aufgrund seiner beweglichen Teile eine starke Quelle für Störgase sein kann, bei Einsatz entsprechender Materialien aber auch eine Senke. Eine Durchführung für den Antrieb erfordert eine Öffnung in der Wandung der inneren Kammer, so dass es zu einem Austausch zwischen der äußeren Kammer und der Innenkammer kommen kann, welche die Messungen verfälschen kann.

Eine Durchführung kann zwar abgedichtet werden, bekannte emissionsarme oder -freie Dichtungsmaterialien sind allerdings für die im Betrieb erreichten Temperaturen nicht ausreichend temperaturstabil, und temperaturstabile Dichtungsmaterialen sind nicht in ausreichendem Maße emissionsarm oder emissionsfrei, und daher für die Anwendung eher ungeeignet.

Um dieses Problem auszuschalten, geht die vorliegende Erfindung von einer magnetischen Durchführung aus, wobei die Drehung, die von einem Motor ausgeht, über eine Magnetanordnung von außerhalb der Wandung der Innenkammer nach innerhalb der Innenkammer übertragen wird. Die Magnetanordnung wird von dem Motor zu einer Drehung angetrieben, welche durch die magnetischen Mitnahmekräfte der Anordnung nach innen übertragen wird. Diese Art der Bewegungsübertragung erlaubt eine Minimierung der Kontamination des Innenraums der Innenkammer durch die äußere Kammer.

In Ausführungsformen werden oder sind die Magnete jeweils paarweise mit in Axialrichtung der Ventilatordurchführung gerichteter gleicher Polarität in einander entsprechende Magnetsitze des ersten Magnethalters und des zweiten Magnethalters eingesetzt. Da die Magnete sich in der entsprechenden gleichen Polarität gegenseitig anziehen, ist eine gute Kraftübertragung gewährleistet und die Magnete werden bereits durch ihre gegenseitige magnetische Anziehung in ihren Sitzen gehalten. Somit können die Magnethalter konstruktiv sehr einfach gestaltet sein.

Vorzugsweise ist oder sind das erste Rotationslager und/oder das zweite Rotationslager als Wälzlager ausgeführt, insbesondere als Kugellager.

Das erste äußere Lagerteil weist vorteilhafterweise einen Anschluss für einen Ventilator und das zweite äußere Lagerteil einen Anschluss für eine Antriebswelle auf. Der Anschluss einer Antriebswelle an den Anschluss am zweiten äußeren Lagerteil kann vorteilhafterweise über eine torsionssteife Wendelkupplung erfolgen, welche eine wünschenswerte Flexibilität in die mechanisch diffizile Verbindung der gegebenenfalls vergleichsweise dünnen längserstreckten Antriebswelle mit der Ventilatordurchführung einbringt.

In Ausführungsformen sind das erste innere Lagerteil und das zweite innere Lagerteil magnetisch an der Wandung der Innenkammer fixiert oder fixierbar oder auf einem durch eine Öffnung in der Wandung geführten Gewindestift fixiert oder fixierbar. Sofern die beiden Durchführungsteile magnetisch an den gegenüberliegenden Flächen der Wandung der Innenkammer angebracht werden, ist überhaupt keine Öffnung in der Wandung notwendig. Dazu muss unterschieden werden, dass es jeweils einen zentralen Magneten in den feststehenden Lagerteilen des ersten und des zweiten Durchführungsteils gibt, die gemeinsam an der Wandung haften und möglichst fluchtend miteinander angeordnet werden. Hierzu hilft die gegenseitige magnetische Anziehung der beiden Magneten, während die rotierenden Magneten in der rotierenden Magnetanordnung innen und außen jeweils um das Zentrum herum drehbar angeordnet sind.

Vorteilhafterweise sind bei einer magnetischen Fixierung des ersten inneren Lagerteils und des zweiten inneren Lagerteils an der Wandung der Innenkammer die Lagerteile auf die Innen- und Außenseite der Wandung fluchtend zueinander aufgepunktet oder angepunktet. Dies bedeutet, dass auf der Innenseite und der Außenseite der Wandung zueinander ausgerichtete Vertiefungen als Aufpunkte eingebracht werden bzw. wurden, die im Zusammenwirken mit einer beispielsweise dornenförmigen zentralen Erhebung an den beiden inneren Lagerteilen für eine formschlüssige Zentrierung der beiden inneren Lagerteile zueinander sorgen. Die Magnetkraft zwischen den beiden inneren Lagerteilen hält diese dann in Position. Eine Durchbrechung der Wandung ist nicht nötig.

Sollte eine Durchführungsöffnung notwendig sein, so ist vorzugsweise, insbesondere auf der Seite des zweiten Durchführungsteils, eine Dichtung zur Abdichtung einer Durchführungsöffnung in einer Kammerwand umfasst. Die Dichtung kann einen breiten Dichtungsring zur Doppelung der Wandungsstärke der Innenkammer umfassen. Dadurch, dass nur ein Gewindestift durchgeführt werden muss, ist die Durchführungsöffnung klein. Zusätzlich wird das Eindringen von Emissionen in die Innenkammer minimiert, wenn die Dichtung an der Außenseite der Kammerwand, also der Seite des zweiten Durchführungsteils, angeordnet ist.

Wenn im ersten Durchführungsteil und/oder im zweiten Durchführungsteil eine Feder umfasst ist, die eine Vorspannung des ersten äußeren Lagerteils und/oder des zweiten äußeren Lagerteils in Richtung auf die Wandung hin erzeugt, kann eine Wellenflucht ausgeglichen werden.

Um Beeinflussungen der Emissionsprüfung durch die Ventilatordurchführung möglichst gering zu halten, sind einige oder alle Bestandteile der Ventilatordurchführung keramisch ausgeführt. Dies betrifft besonders die im Inneren der Innenkammer angeordneten Teile.

Die der Erfindung zugrundeliegende Aufgabe wird auch durch eine Emissionsprüfkammer mit einem äußeren Kammergehäuse und einer im Inneren des äußeren Kammergehäuses angeordneten Innenkammer gelöst, welcher über einen Prüflufteinlass Prüfluft zuführbar ist und aus welcher Prüfluft durch einen Prüfluftauslass entnehmbar ist, wobei in der Innenkammer ein Ventilator zur Durchmischung der Prüfluft in der Innenkammer angeordnet ist, wobei die Emissionsprüfkammer sich dadurch auszeichnet, dass der Ventilator über eine zuvor beschriebene erfindungsgemäße Ventilatordurchführung mit einem Antriebsmotor verbunden ist.

Die erfindungsgemäße Emissionsprüfkammer weist daher alle Eigenschaften, Vorteile und Merkmale der erfindungsgemäßen Ventilatordurchführung auf.

In Ausführungsformen weist ein Innenraum des äußeren Kammergehäuses eine Temperaturregulierung auf, wobei innerhalb des äußeren Kammergehäuses zwischen dem Prüflufteinlass und der Innenkammer ein Wärmetauscher angeordnet ist, durch den die Prüfluft auf dem Weg zur Innenkammer geleitet wird.

In einer bevorzugten Ausführungsform weist eine Wandung der Innenkammer an der Position der Ventilatordurchführung eine Öffnung auf, durch die der Gewindestift geführt ist, wobei die zu der Wandung hin orientierten Seiten des ersten inneren Lagerteils und des zweiten inneren Lagerteils flach ausgestaltet sind und sich im auf den Gewindestift fixierten Zustand an der Wandung abstützen.

Hierbei ist, insbesondere auf einer Außenseite der Wandung der Innenkammer, vorzugsweise eine Dichtung für die Öffnung in der Wandung angeordnet.

Die Erfindung ist im beigefügten Anspruchssatz definiert.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer erfindungsgemäβen Emissionsprüfkammer,
- Fig. 2: eine schematische Querschnittsdarstellung durch eine erfindungsgemäße Ventilatordurchführung,
- Fig. 3a, b: eine perspektivische und eine Querschnittsdarstellung einer erfindungsgemäßen Ventilatordurchführung.

In den Zeichnungen sind jeweils gleiche oder gleichartige Elemente und/oder Teile mit denselben Bezugsziffern versehen, so dass von einer erneuten Vorstellung jeweils abgesehen wird.

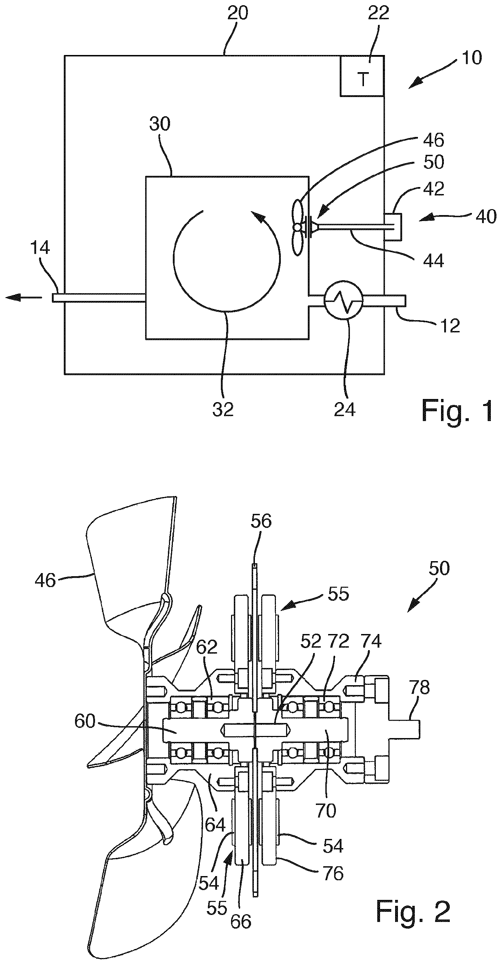

Fig. 1 zeigt eine schematische Darstellung einer erfindungsgemä-βen Emissionsprüfkammer 10. Die Emissionsprüfkammer 10 ist doppelwandig, da sie ein äußeres Kammergehäuse 20 und eine Innenkammer 30 umfasst. Das äußere Kammergehäuse 20 ist mittels einer Temperaturregulierung 22 temperaturreguliert und wird zum Zwecke einer Emissionsprüfung auf eine erhöhte Temperatur, beispielsweise 60 °C bis 100 °C, aufgeheizt. Die Temperaturregulierung 22 sorgt dafür, dass die Temperatur in dem äußeren Kammergehäuse 20 bis auf ca. ±1 °C konstant bleibt.

Die Innenkammer 30, in der ein nicht dargestellter Prüfkörper gelegt oder anderweitig eingebracht werden kann, verfügt über einen Ventilator 46, also ein Element, um eine Durchmischung 32 der Prüfluft im Inneren der Innenkammer 30 zu bewirken, welche kontinuierlich durch einen Prüflufteinlass 12 eingetragen und durch einen Prüfluftauslass 14 in Richtung zu einer Analytik als Teil einer Messeinrichtung (nicht dargestellt) ausgetragen wird. Prüflufteinlass 12 und Prüfluftauslass 14 haben keine Verbindung mit dem Innenraum des äußeren Kammergehäuses 20, welches zur thermischen Abschirmung der Innenkammer 30 dient. Zur Vorwärmung der Prüfluft ist im Prüflufteinlass 12 ein Wärmetauscher 24 vorgesehen, welcher in thermischen Austausch mit der temperierten Luft in dem äußeren Kammergehäuse 20 steht.

Der Ventilator 46 ist Teil eines Ventilatorsystems 40, in welchem er von einem in dem vorliegenden Ausführungsbeispiel außerhalb des äußeren Kammergehäuses 20 angeordneten Antriebsmotor 42 angetrieben wird, welche eine Antriebswelle 44 antreibt, welche über eine im Folgenden näher beschriebene Ventilatordurchführung 50 den Ventilator 46 antreibt. Eine Anordnung des Antriebsmotors 42 außerhalb des äußeren Kammergehäuses 20 ist nicht unbedingt notwendig, aber zweckmäßig aufgrund der besseren Erreichbarkeit sowie aus technischen Gründen, da der Antriebsmotor 42 außerhalb des äußeren Kammergehäuses 20 nicht einer zusätzlichen thermischen Belastung durch die erhöhte Temperatur im Inneren des äu-βeren Kammergehäuses 20 ausgesetzt ist und die beim Betrieb entstehende Wärme nicht die Temperaturregulierung im Inneren des äußeren Kammergehäuses 20 zusätzlich belastet.

Fig. 2 zeigt schematisch einen Querschnitt durch eine erfindungsgemäße Ventilatordurchführung 50. In dem gezeigten Ausführungsbeispiel ist eine vertikal verlaufende Symmetrieebene zu erkennen, wobei eine spiegelsymmetrische Ausgestaltung um eine Symmetrieebene allerdings nicht notwendig ist, jedoch einer vereinfachten Darstellung zuträglich ist. In der genannten Symmetrieebene verläuft dann, wenn die Ventilatordurchführung 50 in eine Emissionsprüfkammer 10 eingebaut ist, wie in Fig. 1 dargestellt, die in Fig. 2 nicht dargestellte Wandung der Innenkammer 30. In Fig. 2 links dargestellt ist somit der Teil der Ventilatordurchführung 50, welcher sich innerhalb der Innenkammer 30 befindet, während der rechts dargestellte Teil sich außerhalb der Innenkammer 30 befindet.

Sowohl der innere Teil als auch der äußere Teil zentrieren sich auf einem Gewindestift 52, der an seinen beiden Enden mit einem Außengewinde versehen ist, und der durch eine Öffnung in der Wandung geführt wird, welche lediglich die Größe des Durchmessers des Gewindestifts 52 aufweisen muss. Auf die beiden Enden des Gewindestifts 52 sind jeweils ein erstes inneres Lagerteil 60 und ein zweites inneres Lagerteil 70 aufgeschraubt und fixiert, die den unbeweglichen zentralen Teil zweier der beiden Durchführungsteile darstellen. Beide weisen im Ausführungsbeispiel der Fig. 2 nach außen hin jeweils eine verjüngte zylindrische Form auf, auf welche jeweils ein erstes Rotationslager in Form eines Wälzlagers 62 und ein zweites Rotationslager in Form eines Wälzlagers 72 aufgesteckt sind, auf die ihrerseits ein erstes äußeres Lagerteil 64 und ein zweites äußeres Lagerteil 74 aufgesteckt sind. Die ersten und zweiten äußeren Lagerteile 64 und 74 sind damit gegenüber den fixierten und nicht drehbaren ersten und zweiten inneren Lagerteilen 60 und 70 gegenüber drehbar.

Es existiert keine mechanische Verbindung zwischen den ersten und zweiten äußeren Lagerteilen 64 und 74, mittels der eine Drehung des zweiten äußeren Lagerteils 74 auf das erste äußere Lagerteil 64 direkt übertragen würde. Die äußeren Lagerteile 64 und 74 sitzen damit auf der gleichen Achse, aber nicht auf der gleichen Welle.

Zur Übertragung der Drehbewegung von dem zweiten äußeren Lagerteil 74 auf das erste äußere Lagerteil 64 weisen beide jeweils einen ersten Magnethalter 66 bzw. einen zweiten Magnethalter 76 mit Magnetsitzen 55 für Magneten 54 auf. Bei den Magnetsitzen 55 handelt es sich um Aussparungen in einer zur Aufnahme der Magnete 54 geeigneten Form, insbesondere zur form- und/oder kraftschlüssigen Aufnahme der Magnete 54.

Alternativ zur mechanischen Kopplung über den Gewindestift 52 kann auch eine magnetische Fixierung mit einem zentralen Magneten im ersten inneren Lagerteil 60 und einem zentralen Magneten im zweiten inneren Lagerteil 70 verwendet werden. Die Notwendigkeit einer Durchführungsöffnung in der Wandung der Innenkammer 30 entfällt dann.

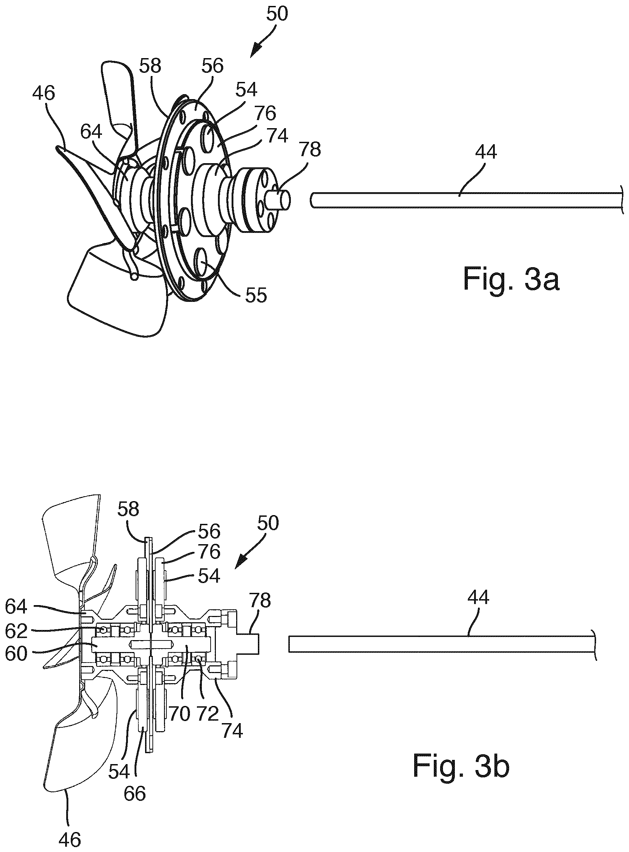

Zur Abdichtung der Durchführungsöffnung ist ein Dichtungsring 56 vorgesehen, der, vorzugsweise von außen, eine in Fig. 3 gezeigte Dichtung 58 gegen die Wandung drückt, um die Durchführungsöffnung abzudichten.

Das erste äußere Lagerteil 64 ist an seinem Ende mit einer Aufnahme bzw. einem Anschluss für den Ventilator 46 versehen, während das zweite äußere Lagerteil 74 einen Wellenanschluss 78 für eine Antriebswelle 44 aufweist. Die Verbindung zwischen Antriebswelle 44 und Wellenanschluss 78 kann beispielsweise form- und/oder kraftschlüssig ausgestaltet sein.

Die Figuren 3a) und 3b) zeigen die erfindungsgemäße Ventilatordurchführung 50 in einer perspektivischen und in einer Querschnittsdarstellung zusammen mit der Antriebswelle 44. In der perspektivischen Darstellung ist erkennbar, dass der zweite Magnethalter 76 scheibenförmig ausgestaltet ist. Entlang seines Umfangs weist der Magnethalter 76 sechs Magnetsitze 55 für Magneten 54 auf, die gleichmäßig über den Umfang verteilt sind. Die sechs gleichmäßig um den Umfang verteilten Magnete 54 erzeugen ein inhomogenes Magnetfeld, welches mit einem gleichartig ausgestalteten inhomogenen Magnetfeld auf der Innenseite der Ventilatordurchführung 50 zusammengelegt ist, welches von einem weiteren, in der perspektivischen Darstellung nicht sichtbaren, Magnethalter 66 mit einer gleichen Konfiguration von Magnetsitze 55 und Magneten 54 in den Magnetsitzen 55 erzeugt wird. Die Inhomogenität des Magnetfelds in Umfangsrichtung sorgt dafür, dass eine Drehung der Magnete 54 im äußeren Magnethalter 76 zu einer gleichartigen Drehung des inneren Magnethalters 66 führt. Diese wiederum wird auf den Propeller 46 übertragen.

Die Paare von Magneten 54, die sich paarweise innerhalb und außerhalb der Wandung gegenüberliegen, sind jeweils gleich gepolt, in einer Ausrichtung, die sicherstellt, dass sich die zueinander gepaarten Magneten 54 gegenseitig anziehen. Die Magnetsitze 55 sind vorzugsweise derart ausgestaltet, dass die Magnete 54 nicht mit stillstehenden Teilen der Ventilatordurchführung 50 oder der Wandung der Innenkammer 30 in Kontakt kommen und dadurch Reibung erzeugen.

Die Bestandteile der Ventilatordurchführung sind vorzugsweise aus für die zu messenden Emissionsgase im Wesentlichen inerten Material hergestellt, beispielsweise in vollkeramischer Ausführung. Es können Vorspannfedern vorhanden sein (nicht dargestellt), die die äußeren Lagerteile 64, 74 in Richtung der Wandung der Innenkammer 30 vorspannen und so für einen ruhigen und spielarmen Lauf sorgen. Der Anschluss der Antriebswelle 44 an den Wellenanschluss 78 kann mithilfe einer torsionssteifen Wellenkupplung (nicht dargestellt) erfolgen.

### Bezugszeichenliste

- 10: Emissionsprüfkammer
- 12: Prüflufteinlass
- 14: Prüfluftauslass
- 20: äußeres Kammergehäuse
- 22: Temperaturregulierung
- 24: Wärmetauscher
- 30: Innenkammer
- 32: Luftdurchmischung
- 40: Ventilatorsystem
- 42: Antriebsmotor
- 44: Antriebswelle
- 46: Ventilator
- 50: Ventilatordurchführung
- 52: Gewindestift
- 54: Magnet
- 55: Magnetsitz
- 56: Dichtungsring
- 58: Dichtung
- 60: erstes inneres Lagerteil
- 62: erstes Wälzlager
- 64: erstes äußeres Lagerteil
- 66: erster Magnethalter
- 70: zweites inneres Lagerteil
- 72: zweites Wälzlager
- 74: zweites äußeres Lagerteil
- 76: zweiter Magnethalter
- 78: Wellenanschluss

## Patentansprüche

1. Ventilatordurchführung (50) für eine Emissionsprüfkammer (10) mit einem äußeren Kammergehäuse (20) und einer im Inneren des äußeren Kammergehäuses (20) angeordneten Innenkammer (30) zur Übertragung einer Drehbewegung einer Antriebswelle (44) von außerhalb der Innenkammer (30) auf einen Ventilator (46) innerhalb der Innenkammer (30), wobei die Ventilatordurchführung (50) ein erstes Durchführungsteil und ein mit dem ersten Durchführungsteil konzentrisch angeordnetes zweites Durchführungsteil aufweist, wobei das erste Durchführungsteil innerhalb der Innenkammer (30) und das zweite Durchführungsteil außerhalb der Innenkammer (30) angeordnet ist, wobei das erste Durchführungsteil ein in Bezug auf eine Wandung der Innenkammer (30) fixierbares erstes inneres Lagerteil (60), ein erstes Rotationslager und ein erstes äußeres Lagerteil (64) aufweist, welches über das erste Rotationslager drehbar auf dem ersten inneren Lagerteil (60) gelagert ist, wobei das zweite Durchführungsteil ein in Bezug auf die Wandung der Innenkammer (30) fixierbares zweites inneres Lagerteil (70), ein zweites Rotationslager und ein zweites äußeres Lagerteil (74) aufweist, welches über das zweite Rotationslager drehbar auf dem zweiten inneren Lagerteil (70) gelagert ist, wobei das erste äußere Lagerteil (64) einen mitdrehenden ersten Magnethalter (66) und das zweite äußere Lagerteil (74) einen mitdrehenden zweiten Magnethalter (76) aufweist, wobei der erste Magnethalter (66) und der zweite Magnethalter (76) jeweils einen oder mehrere in Umfangsrichtung diskrete Magnetsitze (55) in einander entsprechender räumlicher Anordnung aufweisen, in den oder die jeweils ein Magnet (54) einsetzbar oder eingesetzt ist.

2. Ventilatordurchführung (50) nach Anspruch 1, **dadurch gekennzeichnet, dass** die Magnete (54) jeweils paarweise mit in Axialrichtung der Ventilatordurchführung (50) gerichteter gleicher Polarität in einander entsprechende Magnetsitze (55) des ersten Magnethalters (66) und des zweiten Magnethalters (76) eingesetzt werden oder sind.

3. Ventilatordurchführung (50) nach Anspruch 1 oder 2, **dadurch gekennzeichnet, dass** das erste Rotationslager und/oder das zweite Rotationslager als Wälzlager (62, 72) ausgeführt ist oder sind.

4. Ventilatordurchführung (50) nach einem der Ansprüche 1 bis 3, **dadurch gekennzeichnet, dass** das erste äußere Lagerteil (64) einen Anschluss für einen Ventilator (46) und das zweite äußere Lagerteil einen Anschluss für eine Antriebswelle (44) aufweist.

5. Ventilatordurchführung (50) nach einem der Ansprüche 1 bis 4, **dadurch gekennzeichnet, dass** das erste innere Lagerteil (60) und das zweite innere Lagerteil (70) magnetisch an der Wandung der Innenkammer (30) fixiert oder fixierbar sind oder auf einem durch eine Öffnung in der Wandung geführten Gewindestift (52) fixiert oder fixierbar sind.

6. Ventilatordurchführung (50) nach Anspruch 5, **dadurch gekennzeichnet, dass** bei einer magnetischen Fixierung des ersten inneren Lagerteils (60) und des zweiten inneren Lagerteils (70) an der Wandung der Innenkammer (30) die Lagerteile auf die Innen- und Außenseite der Wandung fluchtend zueinander aufgepunktet oder angepunktet sind.

7. Ventilatordurchführung (50) nach Anspruch 5, **dadurch gekennzeichnet, dass**, insbesondere auf der Seite des zweiten Durchführungsteils, eine Dichtung (56, 58) zur Abdichtung einer Durchführungsöffnung in einer Kammerwand umfasst ist, wobei die Dichtung (56, 58) insbesondere einen breiten Dichtungsring zur Doppelung der Wandungsstärke der Innenkammer (30) umfasst.

8. Ventilatordurchführung (50) nach einem der Ansprüche 1 bis 7, **dadurch gekennzeichnet, dass** im ersten Durchführungsteil und/oder im zweiten Durchführungsteil eine Feder umfasst ist, die eine Vorspannung des ersten äußeren Lagerteils (64) und/oder des zweiten äußeren Lagerteils (64) in Richtung auf die Wandung hin erzeugt.

9. Ventilatordurchführung (50) nach einem der Ansprüche 1 bis 8, **dadurch gekennzeichnet, dass** einige oder alle Bestandteile der Ventilatordurchführung (50) keramisch ausgeführt sind.

10. Emissionsprüfkammer (10) mit einem äußeren Kammergehäuse (20) und einer im Inneren des äußeren Kammergehäuses (20) angeordneten Innenkammer (30), welcher über einen Prüflufteinlass (12) Prüfluft zuführbar ist und aus welcher Prüfluft durch einen Prüfluftauslass (14) entnehmbar ist, wobei in der Innenkammer (30) ein Ventilator (46) zur Durchmischung der Prüfluft in der Innenkammer (30) angeordnet ist, **dadurch gekennzeichnet, dass** der Ventilator (46) über eine Ventilatordurchführung (50) nach einem der Ansprüche 1 bis 9 mit einem Antriebsmotor (42) verbunden ist.

11. Emissionsprüfkammer (10) nach Anspruch 10, **dadurch gekennzeichnet, dass** ein Innenraum des äußeren Kammergehäuses (20) eine Temperaturregulierung (22) aufweist, wobei innerhalb des äußeren Kammergehäuses zwischen dem Prüflufteinlass (12) und der Innenkammer (30) ein Wärmetauscher (24) angeordnet ist, durch den die Prüfluft auf dem Weg zur Innenkammer (30) geleitet wird.

12. Emissionsprüfkammer (10) nach Anspruch 10 oder 11, **dadurch gekennzeichnet, dass** eine Wandung der Innenkammer (30) an der Position der Ventilatordurchführung (50) eine Öffnung aufweist, durch die der Gewindestift (52) geführt ist, wobei die zu der Wandung hin orientierten Seiten des ersten inneren Lagerteils (60) und des zweiten inneren Lagerteils (70) flach ausgestaltet sind und sich im auf den Gewindestift (52) fixierten Zustand an der Wandung abstützen.

13. Emissionsprüfkammer (10) nach Anspruch 12, **dadurch gekennzeichnet, dass**, insbesondere auf einer Außenseite der Wandung der Innenkammer (30), eine Dichtung für die Öffnung in der Wandung angeordnet ist.

## Claims

1. A fan duct (50) for an emission testing chamber (10) having an outer chamber housing (20) and an inner chamber (30) arranged inside the outer chamber housing (20) for transmitting a rotary movement of a drive shaft (44) from outside the inner chamber (30) to a fan (44) inside the inner chamber (30), wherein the fan duct (50) comprises a first duct part and a second duct part arranged concentrically with the first duct part, wherein the first duct part is arranged inside the inner chamber (30) and the second duct part is arranged outside the inner chamber (30), wherein the first duct part comprises a first inner bearing part (60) which can be secured relative to a wall of the inner chamber (30), a first rotary bearing, and a first outer bearing part (64) which is rotatably mounted on the first inner bearing part (60) via the first rotary bearing, wherein the second duct part comprises a second inner bearing part (70) which can be secured relative to the wall of the inner chamber (30), a second rotary bearing, and a second outer bearing part (74) which is rotatably mounted on the second inner bearing part (70) via the second rotary bearing, wherein the first outer bearing part (64) comprises a co-rotating first magnet holder (66) and the second outer bearing part (74) comprises a co-rotating second magnet holder (76), wherein the first magnet holder (66) and the second magnet holder (76) each comprise one or more magnet seats (55) discrete in the circumferential direction in a corresponding arrangement, in which magnet seat or seats one magnet (54) is or can be inserted in each case.

2. The fan duct (50) according to claim 1, **characterized in that** the magnets (54) are or have been inserted in pairs in mutually corresponding magnet seats (55) of the first magnet holder (66) and of the second magnet holder (76) with the same polarity in the axial direction of the fan duct (50).

3. The fan duct (50) according to claim 1 or 2, **characterized in that** the first rotary bearing and/or the second rotary bearing is or are designed as rolling bearings (62, 72).

4. The fan duct (50) according to any one of claims 1 to 3, **characterized in that** the first outer bearing part (64) comprises a connection for a fan (46) and the second outer bearing part comprises a connection for a drive shaft (44).

5. The fan duct (50) according to any one of claims 1 to 4, **characterized in that** the first inner bearing part (60) and the second inner bearing part (70) are or can be secured magnetically to the wall of the inner chamber (30) or are or can be secured on a set screw (52) that is guided through an opening in the wall.

6. The fan duct (50) according to claim 5, **characterized in that**, in the case of the first inner bearing part (60) and the second inner bearing part (70) being magnetically secured to the wall of the inner chamber (30), the bearing parts are spot-welded or tack-welded onto the inside and outside of the wall so as to be flush with one another.

7. The fan duct (50) according to claim 5, **characterized in that**, in particular on the side of the second duct part, a seal (56, 58) is comprised for sealing a duct opening in a chamber wall, wherein the seal (56, 58) in particular comprises a broad sealing ring for doubling the wall thickness of the inner chamber (30).

8. The fan duct (50) according to any one of claims 1 to 7, **characterized in that** a spring which generates a preload of the first outer bearing part (64) and/or the second outer bearing part (64) in the direction of the wall is comprised in the first duct part and/or in the second duct part.

9. The fan duct (50) according to any one of claims 1 to 8, **characterized in that** some or all components of the fan duct (50) are made of ceramic.

10. An emission testing chamber (10) having an outer chamber housing (20) and an inner chamber (30) which is arranged inside the outer chamber housing (20) and to which test air can be fed via a test air inlet (12) and from which test air can be withdrawn through a test air outlet (14), wherein a fan (46) for mixing the test air in the inner chamber (30) is arranged in the inner chamber (30), **characterized in that** the fan (46) is connected to a drive motor (42) via a fan duct (50) according to any one of claims 1 to 9.

11. The emission testing chamber (10) according to claim 10, **characterized in that** an interior of the outer chamber housing (20) comprises a temperature regulation system (22), wherein a heat exchanger (24) through which the test air is conducted on the way to the inner chamber (30) is arranged inside the outer chamber housing between the test air inlet (12) and the inner chamber (30).

12. The emission testing chamber (10) according to claim 10 or 11, **characterized in that** a wall of the inner chamber (30) comprises, at the position of the fan duct (50), an opening through which the set screw (52) is guided, wherein the sides of the first inner bearing part (60) and of the second inner bearing part (70) that are oriented toward the wall are designed to be flat and are supported against the wall in the state secured to the set screw (52).

13. The emission testing chamber (10) according to claim 12, **characterized in that**, in particular on an outside of the wall of the inner chamber (30), a seal is arranged for the opening in the wall.

## Revendications

1. Conduit traversant (50) de ventilateur pour une chambre (10) d'essai d'émissions ayant une enceinte extérieure (20) de chambre et une chambre intérieure (30) agencée à l'intérieur de l'enceinte extérieure (20) de chambre pour transmettre un mouvement de rotation d'un arbre d'entraînement (44) depuis l'extérieur de la chambre intérieure (30) à un ventilateur (46) situé à l'intérieur de la chambre intérieure (30), le conduit traversant (50) de ventilateur présentant une première partie de conduit traversant et une deuxième partie de conduit traversant agencée de manière concentrique à la première partie de conduit traversant, la première partie de conduit traversant étant agencée à l'intérieur de la chambre intérieure (30) et la deuxième partie de conduit traversant étant agencée à l'extérieur de la chambre intérieure (30), la première partie de conduit présentant une première partie intérieure de palier (60) apte à être fixée par rapport à une paroi de la chambre intérieure (30), un premier roulement de rotation et une première partie extérieure de palier (64), qui est montée de manière rotative sur la première partie intérieure de palier (60) par l'intermédiaire du premier roulement de rotation, la deuxième partie de conduit traversant présentant une deuxième partie intérieure de palier (70) apte à être fixée par rapport à la paroi de la chambre intérieure (30), un deuxième roulement de rotation et une deuxième partie extérieure de palier (74) qui est montée de manière rotative sur la deuxième partie intérieure de palier (70) par l'intermédiaire du deuxième roulement de rotation, la première partie extérieure de palier (64) présentant un premier support d'aimants (66) tournant avec elle et la deuxième partie extérieure de palier (74) présentant un deuxième support d'aimants (76) tournant avec elle, le premier support d'aimants (66) et le deuxième support d'aimants (76) présentant chacun un ou plusieurs sièges d'aimants (55), séparés dans la direction circonférentielle, dans une disposition spatiale se correspondant mutuellement, dans lesquels chaque aimant (54) est apte à être inséré ou est inséré.

2. Conduit traversant (50) de ventilateur selon la revendication 1, **caractérisé en ce que** les aimants (54) sont insérés par paires ou aptes à être insérés par paires, avec la même polarité orientée dans la direction axiale du conduit traversant (50) de ventilateur, dans des sièges à aimants (55) correspondants du premier support d'aimants (66) et du deuxième support d'aimants (76).

3. Conduit traversant (50) de ventilateur selon la revendication 1 ou la revendication 2, **caractérisé en ce que** le premier roulement de rotation et/ou le deuxième roulement de rotation est réalisé ou sont réalisés sous forme de roulement à rouleaux (62, 72).

4. Conduit traversant (50) de ventilateur selon l'une des revendications 1 à 3, **caractérisé en ce que** la première partie extérieure de palier (64) présente un raccordement pour un ventilateur (46) et la deuxième partie extérieure de palier présente un raccordement pour un arbre d'entraînement (44).

5. Conduit traversant (50) de ventilateur selon l'une des revendications 1 à 4, **caractérisé en ce que** la première partie intérieure de palier (60) et la deuxième partie intérieure de palier (70) sont fixées ou sont aptes à être fixées magnétiquement à la paroi de la chambre intérieure (30) ou sont fixées ou sont aptes à être fixées sur une tige filetée (52) guidée à travers une ouverture dans la paroi.

6. Conduit traversant (50) de ventilateur selon la revendication 5, **caractérisé en ce que**, dans le cas d'une fixation magnétique de la première partie intérieure de palier (60) et de la deuxième partie intérieure de palier (70) sur la paroi de la chambre intérieure (30), les parties de palier sont en alignement l'une avec l'autre, liées par des points situés les uns sur les autres ou les uns à proximité des autres, sur les côtés intérieur et extérieur de la paroi,.

7. Conduit traversant (50) de ventilateur selon la revendication 5, **caractérisé en ce que**, notamment du côté de la deuxième partie de conduit traversant, un joint d'étanchéité (56, 58) est prévu pour assurer l'étanchéité d'une ouverture de conduit traversant dans une paroi de chambre, le joint d'étanchéité (56, 58) comprenant notamment une large bague d'étanchéité pour doubler l'épaisseur de la paroi de la chambre intérieure (30).

8. Conduit traversant (50) de ventilateur selon l'une des revendications 1 à 7, **caractérisé en ce qu'**un ressort est inclus dans la première partie de conduit traversant et/ou dans la deuxième partie de conduit traversant, qui génère une charge sur la première partie extérieure de palier (64) et/ou de la deuxième partie extérieure de palier (64) en direction de la paroi.

9. Conduit traversant (50) de ventilateur selon l'une des revendications 1 à 8, **caractérisé en ce que** certains composants, ou tous les composants, du conduit traversant (50) de ventilateur sont réalisés en céramique.

10. Chambre (10) d'essai d'émissions avec une enceinte extérieure (20) de chambre et une chambre intérieure (30) agencée à l'intérieur de l'enceinte extérieure (20) de chambre, à laquelle de l'air d'essai est apte à être amené par une entrée d'air d'essai (12) et de laquelle de l'air d'essai est apte à être prélevé par une sortie d'air d'essai (14), un ventilateur (46) étant agencé dans la chambre intérieure (30) pour mélanger l'air d'essai dans la chambre intérieure (30), **caractérisée en ce que** le ventilateur (46) est relié à un moteur d'entraînement (42) par un conduit traversant (50) de ventilateur selon l'une des revendications 1 à 9.

11. Chambre (10) d'essai d'émissions selon la revendication 10, **caractérisée en ce qu'**un espace intérieur de l'enceinte extérieure (20) de chambre présente une régulation de température (22), un échangeur de chaleur (24) étant agencé à l'intérieur du boîtier de chambre extérieur entre l'entrée d'air d'essai (12) et la chambre intérieure (30), à travers lequel l'air d'essai est guidé en direction de la chambre intérieure (30).

12. Chambre (10) d'essai d'émissions selon la revendication 10 ou la revendication 11, **caractérisée en ce qu'**une paroi de la chambre intérieure (30) présente, à la position du conduit traversant (50) de ventilateur, une ouverture à travers laquelle est guidée la tige filetée (52), les côtés, orientés vers la paroi, de la première partie intérieure de palier (60) et de la deuxième partie intérieure de palier (70) étant plats et s'appuyant sur la paroi lorsqu'ils sont fixés sur la tige filetée (52).

13. Chambre (10) d'essai d'émissions selon la revendication 12, **caractérisée en ce que**, notamment sur une face extérieure de la paroi de la chambre intérieure (30), est agencé un joint d'étanchéité pour l'ouverture dans la paroi.
